# EUROPÄISCHE PATENTSCHRIFT

(11) **EP 0 794 418 B1**
(45) Veröffentlichungstag und Bekanntmachung des Hinweises auf die Patenterteilung: **20.05.1998**
(21) Anmeldenummer: 97102112.6
(22) Anmeldetag: 11.02.1997
(51) Int. Cl.: G01L 7/04, G05D 16/06

(54) **Röhrenfeder-Manometereinrichtung**
Bourdon pressure gauge device
Dispositif capteur de pression Bourdon

(30) Priorität: 07.03.1996 DE 19608868
(43) Veröffentlichungstag der Anmeldung: 10.09.1997
(73) Patentinhaber: FESTO AG & Co, 73734 Esslingen (DE)
(72) Erfinder: Stoll, Kurt, Dr., 73732 Esslingen (DE); Smit, Hendrik E., 3067 RX Rotterdam (NL)
(74) Vertreter: Abel, Martin, Dipl.-Ing.

(56) Entgegenhaltungen:
- DE-C- 547 854
- FR-A- 2 655 535
- US-A- 3 878 863

## Beschreibung

Die Erfindung betrifft eine Manometereinrichtung, mit einem Manometer in Röhrenfederbauart, das ein Gehäuse aufweist und das über eine mit ihrem einen Ende gehäusefest festgelegte gebogene Röhrenfeder verfügt, deren Innenraum über einen Manometereinlaß mit einem Druckmedium beaufschlagbar ist, wobei die Röhrenfeder in Abhängigkeit von dem momentan in ihrem Innenraum herrschenden Betätigungsdruck eine unterschiedlich starke Krümmung aufweist und bei einer Änderung des Betätigungsdruckes eine Verformung im Sinne einer Aufweitung oder Verengung erfährt, und wobei eine mit der Röhrenfeder gekoppelte Anzeigeeinrichtung vorhanden ist, deren angezeigter Wert vom momentanen Verformungsgrad der Röhrenfeder abhängt.

Eine derartige Manometereinrichtung ist beispielsweise aus dem Dokument US-A- 3,878,863 bekannt.

Manometereinrichtungen dieser Art sind auf dem Gebiet der Pneumatik weit verbreitet, um den in Druckluftleitungen herrschenden Druck anzuzeigen. Das Manometer enthält eine Röhrenfeder, die auch als Bourdon-Feder bezeichnet wird und bei der es sich um eine Biegefeder in Form eines kreisförmig gebogenen Metallröhrchens von in der Regel zweiseitig abgeflachtem Querschnitt handelt. Durch mehr oder weniger starke Druckbeaufschlagung des Innenraumes der Röhrenfeder nimmt diese eine mehr oder weniger stark gekrümmte Gestalt ein, wobei die im Rahmen einer Aufweitung oder Verengung des Bogendurchmessers auftretende Verformung auf eine Anzeigeeinrichtung übertragen wird, durch die bei entsprechender Skalierung der gemessene Druck angezeigt wird. Man nutzt bei der Druckanzeige also die bei Druckbeaufschlagung des Innenraumes der Röhrenfeder proportional zur einwirkenden Druckkraft auftretende Verformung, wobei durch geeignete mechanische oder elektrische Einrichtungen eine verstärkte Anzeige möglich ist, wenn die im Betrieb auftretende Verformung nur gering ist.

Somit kann durch die bekannten Manometereinrichtungen der in einer Druckluftleitung oder einer sonstigen pneumatischen Einrichtung momentan herrschende Druck angezeigt werden. Dieser ist beispielsweise unter Verwendung eines sogenannten Druckregelventils, das oft auch als Druckminderventil bezeichnet wird, auf einen gewünschten Wert einstellbar. Ein derartiges Druckregelventil geht beispielsweise aus dem Fachbuch "Pneumatische Steuerungen", W. Deppert / K. Stoll, Vogel-Verlag, 4.Auflage 1977, Seiten 22/23 hervor.

Die bisherigen, zur Einstellungen eines gewünschten Druckes erforderlichen Maßnahmen erfordern einen aufwendigen Aufbau der eingesetzten Geräte. Die vorliegende Erfindung hat sich zur Aufgabe gestellt, die im Zusammenhang mit der Einstellung eines an einem Manometer abzulesenden Druckes verbundenen konstruktiven und handhabungstechnischen Maßnahmen zu vereinfachen.

Zur Lösung dieser Aufgabe ist erfindungsgemäß bei einer Manometereinrichtung der eingangs genannten Art vorgesehen, daß der Röhrenfeder ein Entlüftungsventil zugeordnet ist, das eine mit dem Innenraum der Röhrenfeder kommunizierenden Entlüftungsöffnung beherrscht, und daß eine Einstelleinrichtung zur variablen Vorgabe des Schaltzustandes des Entlüftungsventils in Abhängigkeit vom Verformungsgrad der Röhrenfeder vorhanden ist.

Auf diese Weise liegt eine Manometereinrichtung vor, die nicht nur eine reine Anzeigefunktion ausübt, sondern außerdem gleichzeitig als Einrichtung zur Einstellung eines gewünschten Drukkes verwendbar ist. Die Röhrenfeder verfügt über ein Entlüftungsventil, das je nach Schaltzustand eine den Innenraum der Röhrenfeder mit der Umgebung verbindende, vorzugsweise düsenartig eng ausgebildete Entlüftungsöffnung verschließt oder freigibt. Der jeweilige Schaltzustand des Entlüftungsventils hängt hierbei, wie auch der durch die Anzeigeeinrichtung angezeigte Wert, vom Verformungsgrad der Röhrenfeder ab. Durch die Einstelleinrichtung ist eine variable Vorgabe des Schaltzustandes in Abhängigkeit vom Verformungsgrad der Röhrenfeder möglich, so daß das Entlüftungsventil bei eine stärkere Krümmung aufweisender Röhrenfeder zunächst geschlossen sein kann, um anschließend nach einer bestimmten, durch den Betätigungsdruck hervorgerufenen Aufweitung durch das Zusammenwirken mit der Einstelleinrichtung in eine Offenstellung überzugehen. Bei freigegebener Entlüftungsöffnung kann Druckmedium aus dem Innenraum der Röhrenfeder ausströmen, so daß der Betätigungsdruck abfällt und die Röhrenfeder im Sinne einer Verengung verformt wird. Hierbei wird das Entlüftungsventil wieder geschlossen. Dieser Vorgang kann sich vielmals wiederholen, wobei sich ein ungefähres Gleichgewicht zwischen dem über den Manometereinlaß zuströmenden und dem über die Entlüftungsöffnung abströmenden Medium einstellt und ein resultierender Betätigungsdruck verbleibt, der der Vorgabe durch die Einstelleinrichtung entspricht. Durch Manipulation an der Einstelleinrichtung läßt sich der Betätigungsdruck verändern und auf einen gewünschten Wert einstellen, wobei über die Anzeigeeinrichtung gleichzeitig ein Ablesen des aktuellen Druckwertes möglich ist.

Die Röhrenfeder des Manometers ist also mit einem sich selbst regulierenden Entlüftungsventil von bevorzugt kleiner Baugröße ausgestattet und über die Einstelleinrichtung läßt sich sehr einfach der gewünschte Druck einstellen. Somit wird also die üblicherweise zum Ablesen eines Druckes verwendete Manometereinrichtung gleichzeitig als Einrichtung zur präzisen Einstellung eines gewünschten Druckes verwendbar, und zwar insbesondere im Zusammenhang mit Druckregeleinrichtungen, bei denen der sich einstellende Betätigungsdruck als Steuerdruck verwendbar ist.

Vorteilhafte Weiterbildungen der Erfindung sind in den Unteransprüchen aufgeführt.

Als besonders vorteilhaft erweist sich eine Bauform, bei der das Entlüftungsventil ein der Entlüftungsöffnung zugeordnetes bewegliches Verschlußglied aufweist, das federnd in eine die Entlüftungsöffnung verschließende Schließstellung vorgespannt ist, wobei an dem Verschlußglied eine sich bei der Verformung der Röhrenfeder auf einem Verlagerungsweg bewegende Betätigungspartie vorgesehen ist, bei deren in einer Öffnungsrichtung erfolgenden Beaufschlagung das Ventilglied relativ zu der Röhrenfeder in eine das Ausströmen von Druckmedium aus dem Innenraum der Röhrenfeder ermöglichende Offenstellung bewegbar ist, und wobei die Einstelleinrichtung einen gehäuseseitig angeordneten Einstellanschlag aufweist, der derart im Verlagerungsweg der Betätigungspartie angeordnet ist, daß diese bei im Sinne einer Aufweitung erfolgender Verformung der Röhrenfeder an dem Einstellanschlag zur Anlage kommen und von diesem in der Öffnungsrichtung beaufschlagt werden kann, wobei der Einstellanschlag in unterschiedlichen Vorgabepositionen entlang dem Verlagerungsweg der Betätigungspartie positionierbar ist.

Zur leichten Einstellung des gewünschten Druckes verfügt die Einstelleinrichtung zweckmäßigerweise über ein verstellbar am Manometergehäuse angeordnetes, insbesondere manuell von außen her bedienbares Stellglied, das mit dem Entlüftungsventil zusammenarbeitet. Dieses Stellglied läßt sich sehr leicht betätigen, wenn es über einen am Manometergehäuse drehbar gelagerten Stellring verfügt. Hierbei kann der Stellring zum Erhalt einer besonders einfachen Bauform von der Seitenwand einer die Anzeigeeinrichtung abdekkenden, zumindest teilweise durchsichtigen Abdeckkappe gebildet sein, an der der Einstellanschlag angeordnet sein kann. Dadurch erübrigen sich separate Stellmittel.

Dem Manometer kann eine Druckregeleinheit zugeordnet sein, bei der der Betätigungsdruck als Steuerdruck wirkt. Auf diese Weise liegt eine kompakte Manometereinrichtung vor, in der ein Manometer und eine Druckregeleinheit zusammengefaßt sind, wobei über das Manometer der Steuerdruck einstellbar ist, der dem am Auslaß der Druckregeleinheit anliegenden Sekundärdruck entgegenwirkt. Da der Steuerdruck manometerseitig einstellbar ist, kann die bei Druckregelventilen üblicherweise vorhandene, dem Sekundärdruck entgegenwirkende mechanische Federeinrichtung entfallen, die häufig eine nur ungenaue Einstellung des Sekundärdruckes ermöglicht. Im Vergleich zu einer Veränderung der Vorspannung der Feder läßt sich unter Verwendung der Einstelleinrichtung eine erheblich leichtere und präzisere Einstellung vornehmen, die im Falle eines mit einem Stellring versehenen Stellgliedes nach Art der Einstellung einer Kameralinse durch einfaches Drehen vorgenommen werden kann, wobei keine hohen Federkräfte überwunden werden müssen.

Bei einer Kombination des Manometers mit einer Druckregeleinheit dient das zur Druckeinstellung verwendete Manometer praktisch als Vorsteuereinrichtung für die als Verstärker wirkende eigentliche Druckregeleinheit.

Bei entsprechender Ausgestaltung können zwischen das Manometer und die Druckregeleinheit zusätzliche Funktionsmodule zwischengeschaltet werden. Derartige Funktionsmodule können beispielsweise Schaltelemente enthalten, über die die Manometereinrichtung ferngesteuert oder durch direkte manuelle Betätigung ein- und ausgeschaltet werden kann, ferner kann beispielsweise die Funktion eines Sicherheitsventils integriert sein oder es kann die Möglichkeit gegeben sein, Diagnose und/oder Steuereinrichtung anschließen zu können.

Nachfolgend wird die Erfindung anhand der beiliegenden Zeichnung näher erläutert. In dieser im einzelnen:
- Figur 1: eine erste Bauform der erfindungsgemäßen Manometereinrichtung in perspektivischer Darstellung, die sich aus einem Manometer und einer Druckregeleinheit zusammensetzt,
- Figur 2: die Manometereinrichtung aus Figur 1 im Längsschnitt gemäß Schnittlinie II-II aus Figur 1,
- Figur 3: eine schematische Draufsicht auf die Manometereinrichtung etwa entsprechend Schnittlinie III-III aus Figur 2, wobei das Entlüftungsventil in der Schließstellung gezeigt ist,
- Figur 4: den das Entlüftungsventil tragenden Bereich der Röhrenfeder aus Figur 3, wobei das Entlüftungsventil eine Offenstellung einnimmt,
- Figur 5: eine weitere Bauform der Manometereinrichtung mit einer einen besonders vorteilhaften Verstellmechanismus aufweisenden Einstelleinrichtung, wobei die Druckregeleinheit sowie die Röhrenfeder und die Anzeigeeinrichtung nicht dargestellt sind, im Längsschnitt,
- Figur 6: einen Ausschnitt der Manometereinrichtung aus Figur 5 im Schnitt gemäß Linie VI-VI aus Figur 5 unter Weglassung des Gehäuses, und
- Figur 7: die Manometereinrichtung aus Figur 1 bei voneinander getrenntem Manometer und Druckregeleinheit und unter Andeutung einer zwischenschaltbaren Funktionseinheit in einer Explosionsdarstellung.

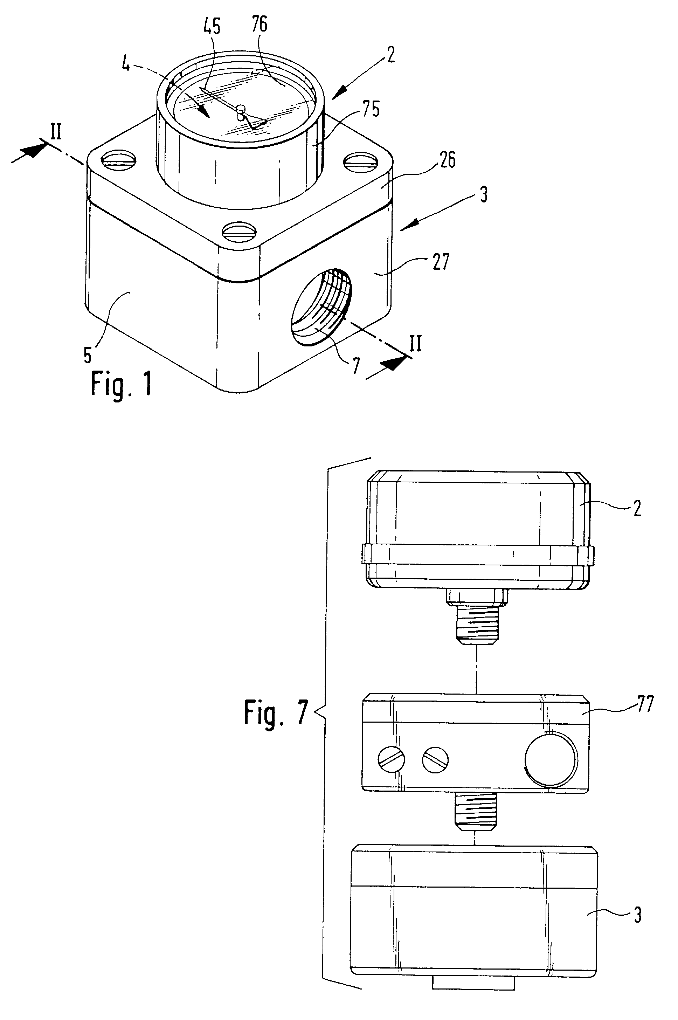

Die in Figuren 1 bis 6 gezeigte Manometereinrichtung 1 verfügt über zwei funktionelle Einheiten in Gestalt eines Manometers 2 und einer Druckregeleinheit 3. Das Manometer hat eine Doppelfunktion, indem es zum einen zur Druckanzeige und zum anderen zur Druckeinstellung verwendet wird, wobei es im Rahmen der Druckeinstellung als Vorsteuereinheit für die Druckregeleinheit 3 dient.

In der gezeigten bevorzugten gestalterischen Ausbildung hat das Manometer 2 eine zylindrische Gestalt und ist über sein Manometergehäuse 4 an einer der Seitenflächen des zweckmäßigerweise quaderförmig ausgebildeten Reglergehäuses 5 festgelegt.

Die Druckregeleinheit 3 hat einen Primärdruck-Einlaß 6 und einen Sekundärdruck-Auslaß 7, die über einen Hauptströmungskanal 8 miteinander verbunden sind. An den Primärdruck-Einlaß 6 ist eine Druckmittelquelle 9 anschließbar. Der Sekundärdruck-Auslaß 7 dient zur Verbindung mit einem oder mehreren nicht näher dargestellten Verbrauchern, die mit einem Druck betrieben werden sollen, der geringer ist als der von der Druckmittelquelle 9 gelieferte Primärdruck.

In den Hauptströmungskanal 8 der Druckregeleinheit 3 ist ein Steuerventil 12 zwischengeschaltet. Es verfügt über ein bewegliches Ventilglied 13, das als Sitzventilglied ausgebildet ist und in der gezeigten Schließstellung dichtend an einem den Hauptströmungskanal 8 umgebenden Ventilsitz 14 anliegt und dadurch die Fluidverbindung zwischen dem Primärdruck-Einlaß 6 und dem Sekundärdruck-Auslaß 7 unterbricht.

Durch das Steuerventil 12 ist der Hauptströmungskanal 8 in einen Einlaßabschnitt 16 und einen Auslaßabschnitt 17 unterteilt.

An dem Ventilsitz 14 greift eine Betätigungsstößel 15 an, der in den Auslaßabschnitt 17 hinein zu einem vorzugsweise als biegeelastische Membrane ausgebildeten Betätigungsorgan 18 ragt. Das Betätigungsorgan 18 bildet eine bewegliche Wand des Auslaßabschnittes 17, wobei seine dem Auslaßabschnitt 17 zugewandte Fläche eine erste Betätigungsfläche 22 bildet, die stets von dem im Auslaßabschnitt 17 herrschenden Sekundärdruck beaufschlagt ist.

Das Betätigungsorgan 18 trennt den Auslaßabschnitt 17 von einer Steuerkammer 24 ab. Die der ersten Betätigungsfläche 22 entgegengesetzte Fläche des Betätigungsorganes 18 bildet eine zweite Betätigungsfläche 23, die der Steuerkammer 24 zugewandt ist.

Das Betätigungsorgan 18 ist in Richtung der mit Doppelpfeil 29 angedeuteten Schaltrichtung des Ventilgliedes 13 relativ zum Reglergehäuse 5 beweglich, steht jedoch im Bereich ihres umlaufenden Randes 30 in dichter Verbindung mit dem Reglergehäuse 5. Im Falle der gezeigten bevorzugten Membranbauform ist das Betätigungsorgan 18 im Bereich seines umlaufenden äußeren Randes 30 zwischen zwei miteinander verbundenen Gehäuseteilen 26, 27 des Reglergehäuses 5 dicht eingespannt.

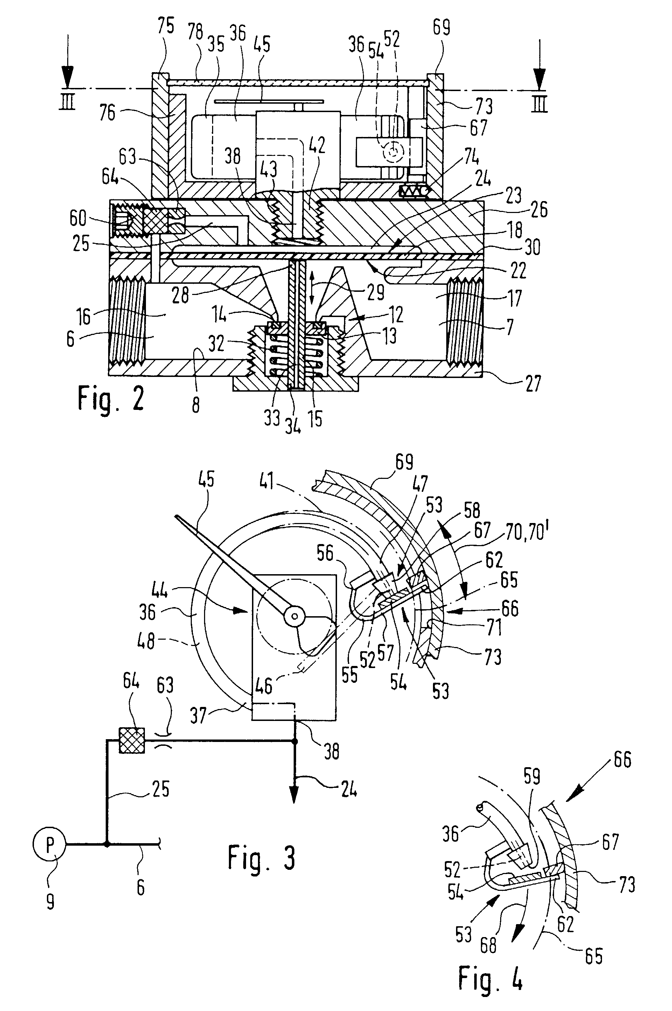

Der fest mit dem Ventilglied 13 verbundene Betätigungsstößel 15 liegt mit seinem zugeordneten Ende 28 an der ersten Betätigungsfläche 22 des Betätigungsorganes 18 an, wenn diese aufgrund einer ausgeglichenen Beaufschlagung ihrer Betätigungsflächen 22, 23 die in Figur 2 gezeigte Neutralstellung einnimmt. Hier befindet sich das Ventilglied 13 in der Schließstellung. Diese Schließstellung ist durch die an dem Ventilglied 13 angreifenden unterschiedlichen Primär- und Sekundärdrücke stabilisiert, wobei zusätzlich eine Feder 32 vorhanden sein kann, die sich zwischen dem Reglergehäuse 5 und dem Ventilglied 13 abstützt und letzteres in Schließrichtung beaufschlagt. Diese Feder 32 dient insbesondere auch dazu, ein Flattern des Ventilgliedes 13 bei häufigem Ansprechen zu verhindern.

Die Höhe des am Sekundärdruck-Auslaß 7 anstehenden auslaßseitigen Druckes (Sekundärdruck) hängt von dem in der Steuerkammer 24 herrschenden Steuerdruck ab. Ist dieser größer als der Sekundärdruck, so verlagert sich das Betätigungsorgan 18 nach unten in Richtung zum Auslaßabschnitt 17, wobei es über den an ihr anliegenden Betätigungsstößel 15 das Ventilglied 13 vom Ventilsitz 14 abhebt, so daß unter dem höheren Primärdruck stehendes Druckmittel aus dem Einlaßabschnitt 16 in den Auslaßabschnitt 17 überströmen kann. Erreicht dabei der Sekundärdruck das Niveau des Steuerdruckes in der Steuerkammer 24, so kehrt das Betätigungsorgan 18 in die Neutralstellung zurück, wobei bedingt durch die Feder 32 das Ventilglied 13 ebenfalls in die Schließstellung zurückkehrt.

Fällt der in der Steuerkammer 24 herrschende Steuerdruck unter den Sekundärdruck, so verlagert sich das Betätigungsorgan 18 in Richtung zur Steuerkammer 24 und hebt vom Betätigungsstößel 15 ab. Dabei gibt das Betätigungsorgan 18 einen den Betätigungsstößel 15 durchsetzenden Ablaßkanal 33 frei, der einerseits an der Stirnseite des dem Betätigungsorgan 18 zugewandten Endes 28 und andererseits am entgegengesetzten, mit der Atmosphäre in Verbindung stehenden Ende 34 des Betätigungsstößels 15 ausmündet. Nun kann Druckmedium aus dem Auslaßabschnitt 17 durch den Ablaßkanal 33 entweichen, wobei der Sekundärdruck absinkt, bis das Betätigungsorgan 18 aufgrund des an ihm angreifenden druckbedingten Kräftegleichgewichts wieder die Neutralstellung einnimmt.

Vorzugsweise ist hier also in das Steuerventil 12 gleichzeitig ein Ablaßventil integriert, das eine einfache und selbsttätige Absenkung des Sekundärdruckes ermöglicht, ohne separate Ventile einsetzen zu müssen.

Das für den Steuerdruck der Steuerkammer 24 verantwortliche Druckmedium - bei der vorliegenden pneumatischen Anwendung handelt es sich um Druckluft - stammt beispielsgemäß aus dem Einlaßabschnitt 16 des Hauptströmungskanals 8. Dieser steht mit der Steuerkammer 24 über einen Steuerkanal 25 in Verbindung.

Das an der Druckregeleinheit 3 angeordnete Manometer 2 ist vom Typ Röhrenfeder-Manometer und verfügt über ein kreisbogenförmig gekrümmtes federelastisches und insbesondere aus Metall bestehendes Röhrenelement, das als Röhrenfeder 36 bezeichnet sei. Der Röhrenquerschnitt ist etwa rechteckähnlich wie in Figur 1 bei 35 angedeutet, wobei insbesondere die bezogen auf das Krümmungszentrum radial ausgerichteten Wandabschnitte der Röhrenfeder abgeflacht sind. Eine derartige Röhrenfeder wird auch als Bourdon-Feder bezeichnet.

Die Röhrenfeder 36 ist mit ihrem einen Ende 37 am Manometergehäuse 4 festgelegt. Diesem befestigten Ende 37 ist der Manometer-Einlaß 38 zugeordnet, über den der hohle Innenraum der Röhrenfeder 36 mit Druckmedium, hier: Druckluft, beaufschlagbar ist. Die Einspeisung des Druckmediums erfolgt aus der Steuerkammer 24, die mit dem Manometereinlaß 38 kommuniziert. Beispielsgemäß befindet sich der Manometereinlaß 38 am stirnseitigen Ende eines am Manometergehäuse 4 festgelegten Anschlußstutzens 42, der in eine in die Steuerkammer 24 mündende und ein Gewinde aufweisende Anschlußöffnung 43 des Reglergehäuses 5 eingeschraubt ist.

Die Druckanzeige des Manometers basiert auf einer elastischen Verformung der Röhrenfeder 36 in Abhängigkeit von dem in ihr herrschenden Druck, wobei dieser Druck als Betätigungsdruck bezeichnet sei. Bei einem geringeren Betätigungsdruck nimmt die Röhrenfeder 36 eine stärker gekrümmte Gestalt ein, die in Figur 3 in durchgezogenen Linien abgebildet ist. Mit zunehmenden Betätigungsdruck weitet sich die Röhrenfeder 36 im Sinne einer Verringerung ihrer Krümmung auf. In Figur 3 ist strichpunktiert bei 41 ein entsprechender Verformungsgrad mit geringerer Federkrümmung angedeutet.

Die Druckanzeige erfolgt über eine mit der Röhrenfeder 36 gekoppelte Anzeigeeinrichtung 44. Beispielsgemäß ist eine Analoganzeige vorgesehen, wobei die Anzeigeeinrichtung 44 über einen insbesondere im Krümmungszentrum der Röhrenfeder 36 drehbar gelagerten Zeiger 45 verfügt, der mit einer nicht näher dargestellten Ableseskala zusammenwirkt. Desweiteren verfügt die Anzeigeeinrichtung 44 über eine Übertragungseinrichtung 46, über die der Bereich des freien Endes 47 der Röhrenfeder 36 mit dem Zeiger 45 gekoppelt ist, so daß die Verformung der Röhrenfeder 36 einen Zeigerausschlag bewirkt und eine vom momentanen Verformungsgrad der Röhrenfeder abhängende Anzeige erfolgt.

Bei Manometern üblicher Bauart ist die Röhrenfeder 36, abgesehen vom Manometer-Einlaß 38, dicht abgeschlossen. Abweichend hiervon ist die Röhrenfeder 36 des erfindungsgemäßen Manometers 2 mit einer Entlüftungsöffnung 52 versehen, über die der Innenraum 48 der Röhrenfeder 36 mit der Umgebung, d.h. mit der Atmosphäre verbindbar ist. Diese Entlüftungsöffnung 52 wird von einem an der Röhrenfeder 36 angeordneten Entlüftungsventil 53 beherrscht, das über ein der Entlüftungsöffnung 52 zugeordnetes bewegliches Verschlußglied 54 verfügt. Die Entlüftungsöffnung 52 ist vorzugsweise als Düsenöffnung mit sehr geringem Strömungsquerschnitt ausgeführt.

Das Verschlußglied 54 kann zwischen einer in Figur 3 gezeigten Schließstellung sowie einer in Figur 4 abgebildeten Offenstellung bewegt werden. In der Schließstellung ist die Entlüftungsöffnung durch das Verschlußglied 54 verschlossen und ein Entweichen von Druckmedium aus dem Innenraum 48 der Röhrenfeder 36 verhindert. Bevorzugt ist das Verschlußglied 54 durch Federkraft in die Schließstellung vorgespannt. Eine sich an der Röhrenfeder 36 abstützende Feder 55 beaufschlagt das Verschlußglied 54 in dem genannten Sinne. Beispielsgemäß bildet die Feder 55 gleichzeitig den Träger des Verschlußgliedes 54, wobei sie vorzugsweise bandfederähnlich ausgebildet ist. In diesem Falle ist die Feder 55 über ihr eines Ende 56 an der Röhrenfeder 36 festgelegt, während ihr frei endender, elastisch beweglicher Federabschnitt 57 das Verschlußglied 54 trägt.

In der gezeigten bevorzugten Ausführungsform mündet die Entlüftungsöffnung 52 an der Stirnseite des freien Endes 47 der Röhrenfeder 36 aus. Dort kann die Röhrenfeder 36 ein Sitzglied 58 tragen, an dem ein die Entlüftungsöffnung 52 umschließender Ventilsitz 59 ausgebildet ist. Das Verschlußglied 54 ist als Abdeckelement ausgeführt, das in der Schließstellung vergleichbar der Funktionsweise eines Sitzventils auf dem Ventilsitz 59 dicht aufsitzt.

In der Offenstellung gemäß Figur 4 steht dem in der Röhrenfeder 36 befindlichen Druckmedium je nach Auslenkung des Verschlußgliedes 54 ein mehr oder weniger großer Ausströmquerschnitt zur Verfügung. Das Öffnung des Entlüftungsventils 53 erfolgt durch Abheben des Verschlußgliedes 54 vom Ventilsitz 59 unter Überwindung der in Schließrichtung wirkenden Federkraft.

Die Schließkraft der Feder 55 ist vorzugsweise so ausgelegt, daß der im Betrieb der Manometereinrichtung 1 im Innenraum 48 maximal auftretende Betätigungsdruck allein nicht in der Lage ist, das Entlüftungsventil 53 in die Offenstellung umzuschalten. Ein Verlagern des Verschlußgliedes 54 in die Offenstellung ist nur dadurch möglich, daß zusätzlich eine mit dem Verschlußglied 54 in fester Verbindung stehende Betätigungspartie 62 mechanisch in Öffnungsrichtung beaufschlagt wird.

Der in der Röhrenfeder 36 herrschende Betätigungsdruck läßt sich demzufolge durch die jeweils gewählte Stellung des Verschlußgliedes 54 beeinflussen. Bei geöffnetem Entlüftungsventil 53 sinkt der Betätigungsdruck, bei geschlossenem Entlüftungsventil 53 kann der Betätigungsdruck ansteigen.

Um den Zustrom von Druckmedium in die Röhrenfeder 36 zu beschränken, ist in den mit dem Primärdruck-Einlaß 6 verbundenen Steuerkanal 25 eine Drosselstelle 63 eingeschaltet. Sie reduziert den Volumenstrom. Der Drosselstelle 63 vorgeschaltet ist zweckmäßigerweise noch ein Filter 64, der verhindert, daß Verunreinigungen die Drosselstelle 63 oder die vorzugsweise ebenfalls sehr klein ausgeführte Entlüftungsöffnung 52 verstopfen. Die Entlüftungsöffnung 52 ist zweckmäßigerweise mit düsenartig engem Querschnitt ausgebildet, ebenso vorzugsweise die Drosselstelle 63.

Bevorzugt ist die Drosselstelle 63 von einem in den Steuerkanal 25 eingesetzten Ringteil gebildet, dessen enge Ringöffnung die Drosselstelle 63 bildet. Das Ringteil und der Filter 64 werden beispielsgemäß von einer Schraube 60 an Ort und Stelle gehalten.

Bei einer durch sich ändernden Betätigungsdruck hervorgerufenen Verformung der Röhrenfeder 36 wird die Betätigungspartie 62 des mitbewegbar an der Röhrenfeder 36 angeordneten Entlüftungsventils 53 verlagert, wobei sie sich entlang eines in Figuren 3 und 4 strichpunktiert angedeuteten Verlagerungsweges 65 bewegt. Die Betätigungspartie 62 ist beispielsgemäß vom freien Ende der Feder 55 gebildet.

Eine mit der Betätigungspartie 62 zusammenwirkende, gehäuseseitig angeordnete Einstelleinrichtung 66 ermöglicht eine variable Vorgabe des Schaltzustandes des Entlüftungsventils 53 in Abhängigkeit vom Verformungsgrad der Röhrenfeder 36. Es ist also eine Vorgabe dahingehend möglich, daß das Entlüftungsventil in Abhängigkeit vom Verformungsgrad der Röhrenfeder 36 eine bestimmte Schaltstellung einnimmt. Diese Einstelleinrichtung 66 hat beim Ausführungsbeispiel einen gehäuseseitig abgestützten Einstellanschlag 67, der in den Verlagerungsweg 65 der Betätigungspartie 62 ragt und stufenlos in unterschiedlichen Vorgabepositionen gemäß einer durch Doppelpfeil 70 angeordneten Positionierrichtung entlang dem Verlagerungsweg 65 positionierbar ist. Der Einstellanschlag 67 ist der Betätigungspartie 62 derart zugeordnet, daß diese bei einer im Sinne einer Aufweitung erfolgenden Verformung der Röhrenfeder 36 an dem Einstellanschlag 67 zur Anlage kommen kann und bei weiterer Aufweitung von dem relativ zur Röhrenfeder 36 feststehenden Einstellanschlag 67 in der durch Pfeil 68 angedeuteten Öffnungsrichtung beaufschlagbar ist.

Beispielsgemäß ragt die Betätigungspartie 62 radial über die gekrümmte Röhrenfeder 36 hinaus. Der Einstellanschlag 67 befindet sich auf der dem freien Ende 47 der Röhrenfeder 36 zugewandten Seite der Betätigungspartie 62. Gelangt die Betätigungspartie 62 infolge einer Verringerung der Krümmung der Röhrenfeder 36 an dem Einstellanschlag 67 zur Anlage, so wird das Verschlußglied 54 bedingt durch die fortgesetzte Aufweitung der Röhrenfeder 36 von dem sich vom Verschlußglied 54 entfernenden Ventilsitz 59 abgehoben. Die hierfür erforderliche Relativbewegung zwischen dem Verschlußglied 54 und dem Ventilsitz 59 wird durch die nachgiebige Feder 55 gewährleistet.

Die gewünschte Vorgabeposition des Einstellanschlages 67 läßt sich leicht manuell mit Hilfe eines Stellgliedes 69 einstellen, das gemäß Doppelpfeil 70' verstellbar an dem Manometergehäuse 4 gelagert ist. Es ist beispielsgemäß von einem zylindrischen Stellring 73 gebildet, der koaxial auf das Manometergehäuse 4 aufgesetzt ist und beispielsweise durch Verrastung - geeignete Rastmittel sind bei 74 angedeutet - am Manometergehäuse 4 axial unbeweglich und zugleich drehbar gehalten wird.

Bevorzugt ist der Stellring 73 von der umlaufenden Seitenwand einer Abdeckkappe 75 gebildet, die auf das Manometergehäuse 4 aufgesetzt ist und die stirnseitig eine durchsichtige Wand 78 aufweist, die im montierten Zustand dem Zeiger 45 vorgelagert ist und ein Ablesen des Zeigerstandes ermöglicht. Durch einfaches Drehen der Abdeckkappe 75 läßt sich somit der Einstellanschlag 67 in gewünschter Weise positionieren.

Das beispielsgemäß vorgesehen Manometergehäuse 4 hat eine topfähnliche Gestalt mit einer umlaufenden zylindrischen Seitenwand 76. Diese Seitenwand 76 dient zur Zentrierung und Drehlagerung der aufgesetzten, ebenfalls topfähnlichen Abdeckkappe 75.

Der Einstellanschlag 67 ist von einem Vorsprung gebildet, der beim Ausführungsbeispiel der Figuren 2 und 3 an der Innenseite des Stellringes 73 angeordnet ist und durch einen sich in Umfangsrichtung erstreckenden Schlitz 71 der Seitenwand 76 des Manometergehäuses 4 in den erwähnten Verlagerungsweg 65 ragt.

Zweckmäßigerweise sind nicht näher dargestellte Sicherungsmittel vorhanden, mit denen sich die eingestellte Vorgabeposition lösbar festlegen läßt. Derartige Sicherungsmittel können von gehäuseseitig und stellgliedseitig festgelegten und ineinandergreifenden Gewindeelementen gebildet sein, die aufgrund der zwischen ihnen herrschenden Reibung ein unbeabsichtigtes Verdrehen des Stellringe 73 verhindern. Denkbar wäre es zum Beispiel auch, an dem Stellglied 69 ein Klemmelement anzuordnen, das sich mit dem Manometergehäuse 4 verspannen läßt.

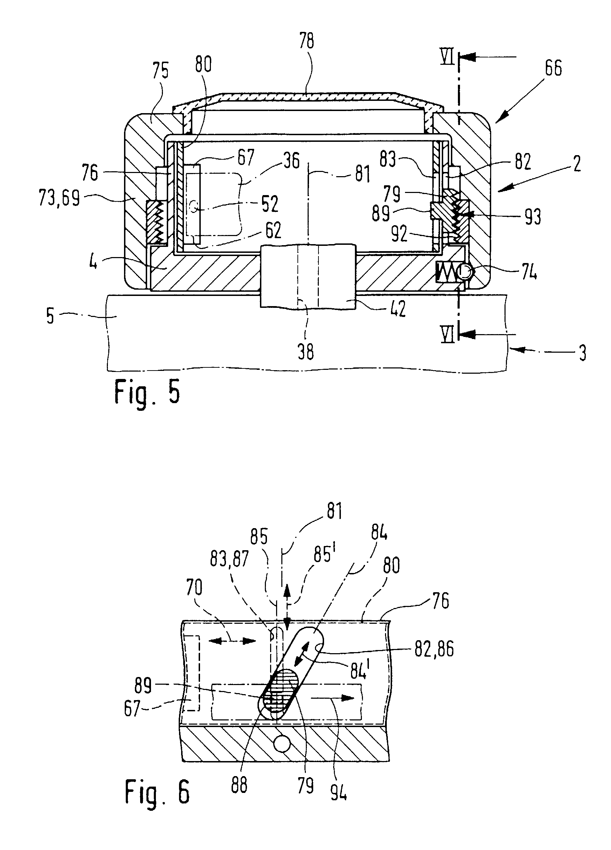

Die Figuren 5 und 6 zeigen ein Manometer 2, dessen Einstelleinrichtung 66 einen besonders vorteilhaften Verstellmechanismus aufweist. Dieser erlaubt ein Einstellen des Einstellanschlages 67 vergleichbar der Einstelltechnik von Kameralinsen. Ein besonderer Vorteil besteht darin, daß eine stufenlose Einstellung mit automatischer Sicherung der eingestellten Vorgabeposition möglich ist, das Ganze unter Verwirklichung einer extrem kompakten Bauweise. Die Baugröße ist nicht oder nur unwesentlich größer als bei einem Manometer üblicher Bauart.

Während bei der Bauform gemäß Figuren 2 und 3 der Einstellanschlag 67 unmittelbar an dem Stellring 73 festgelegt ist, stützt er sich im Falle der Figuren 5 und 6 zwar weiterhin gegenüber dem Gehäuse 4 ab, ist jedoch getrennt vom Stellring 73 ausgebildet, mit dem er über ein Übertragungsglied 79 bewegungsgekoppelt ist.

Der Einstellanschlag 67 ist an einem Lagerteil 80 festgelegt, das beispielsgemäß hülsenförmig ausgeführt ist und koaxial innerhalb der ringförmig umlaufenden Seitenwand 76 des Manometergehäuses 4 angeordnet ist. Das Lagerteil 80 ist gemeinsam mit dem an ihm angeordneten Einstellanschlag 67 relativ zum Manometergehäuse 4 verdrehbar, wobei die strichpunktiert angedeutete Drehachse 81 zweckmäßigerweise mit dem Zentrum der gebogenen Röhrenfeder 36 und der Drehachse des Zeigers 45 zusammenfällt.

Der Einstellanschlag 67 ragt ausgehend von dem ringförmigen Lagerteil 80 radial nach innen in den Verlagerungsweg der Betätigungspartie 62.

An einer Stelle ihres Umfanges verfügt die Seitenwand 76 über eine längliche Durchbrechung 82, die einen Schrägverlauf besitzt, dessen Erstreckungsrichtung 84 über in Umfangsrichtung 94 der Seitenwand 76 und gleichzeitig in Axialrichtung 81 verlaufende Ausdehnungskomponenten verfügt. Dieser Durchbrechung 82 liegt radial eine in dem Lagerteil 80 ausgebildete und ebenfalls längliche weitere Durchbrechung 83 gegenüber, deren Erstreckungsrichtung 85 von der Erstreckungsrichtung 84 divergiert. Beispielsgemäß hat die Erstreckungsrichtung 85 der zweiten Durchbrechung 83 einen axialen Verlauf.

Die beiden Durchbrechungen 82, 83 bilden eine erste und eine zweite Führung 86, 87 für das schon erwähnte Übertragungsglied 79. Dieses greift gleichzeitig in beide Führungen 86, 87 ein und ist somit in der erwähnten ersten Erstreckungsrichtung 84 gemäß Doppelpfeil 84' relativ zum Manometergehäuse 4 und in der zweiten Erstreckungsrichtung 85 gemäß Doppelpfeil 85' relativ zum Lagerteil 80 verschieblich geführt.

Beispielsgemäß verfügt das Übertragungsglied 79 über einen Kopf 88, der in der ersten Führung 86 läuft, sowie einen ausgehend von diesem Kopf 88 radial nach innen ragenden Übertragungsvorsprung 89, der in der zweiten Führung 87 geführt ist.

Bei einer Beaufschlagung des Übertragungsgliedes 79 in axialer Richtung 81 verlagert sich das Übertragungsglied 79 entlang der ersten Führung 86 schräg axial und zugleich in Umfangsrichtung 94 der Seitenwand 76. Die axiale Bewegungskomponente hat hierbei keinen Einfluß auf die Stellung des Lagerteils 80, weil sich der Übertragungsvorsprung 89 ungehindert in Axialrichtung 81 längs der zweiten Führung 87 bewegen kann. Hingegen bewirkt die gemäß Pfeil 94 in Umfangsrichtung der Seitenwand 76 gerichtete Bewegungskomponente eine durch den Formschluß zwischen dem Übertragungsvorsprung 89 und der zweiten Führung 87 bedingte Mitnahme des Lagerteils 80, so daß dieses zu einer Drehbewegung um die Achse 81 veranlaßt wird und eine Verlagerung des Einstellanschlages 67 in der Positionierrichtung 70 bewirkt.

Die hierfür erforderliche Beaufschlagung des Übertragungsgliedes 79 geschieht über den Stellring 73. Dieser trägt im Bereich seines Innenumfanges ein umlaufendes Gewinde 92, das beispielsgemäß am Innenumfang eines an dem Stellring 73 festgelegten Gewinderinges angeordnet ist. Das Übertragungsglied 79 ist an seinem Kopf 88 an der dem Stellring 73 zugewandten Seite mit einer parallel zu den Windungen des Gewindes 92 verlaufenden Verzahnung 93 versehen, die mit dem Gewinde 92 in Gewindeeingriff steht. Wird nun der über die Rastmittel 74 axial fixierte Stellring 73 verdreht hat dies zur Folge, daß das Übertragungsglied 79 längs der zweiten Führung 87 je nach Drehrichtung axial nach außen oder innen verlagert wird.

Somit resultiert ein Verdrehen des Stellringes 73 in Verstellrichtung 70' mit einer gewissen Untersetzung in einem Verlagern des Einstellanschlages 67 in der gleichgerichteten Positionierrichtung 70. Durch die erzielte Untersetzung ist ein sehr feinfühliges Einstellen möglich. Gleichzeitig wird durch den geschilderten Mechanismus erreicht, daß die bei einem Kontakt mit der Betätigungspartie 62 auf den Einstellanschlag 67 wirkenden Kräfte kein selbsttätiges Verstellen der eingestellten Vorgabeposition bewirken können. Jede eingestellte Vorgabestellung ist somit praktisch selbsttätig gegen unbeabsichtigtes Verstellen gesichert.

Es versteht sich, daß die Ausrichtungen der beiden Führungen 86, 87 im Vergleich zur geschilderten Bauform auch umgekehrt vorgesehen sein können, so daß die erste Führung 86 axial verläuft und die zweite Führung 87 einen Schrägverlauf besitzt. Darüberhinaus wäre es auch möglich, beiden Führungen 86, 87 einen Schrägverlauf zu verleihen. Entsprechend der gewählten Neigung und dem Verhältnis der Neigungen der beiden Führungen 86, 87 läßt sich der Übersetzungsgrad zum Einstellen der Vorgabepositionen bedarfsgemäß vorgeben.

Im Betrieb der Manometereinrichtung strömt bei Anlegen des Primärdruckes an den Primärdruck-Einlaß 6 Druckluft gedrosselt über den Steuerkanal 25 in die Steuerkammer 24 und die angeschlossene Röhrenfeder. Aufgrund des dabei ansteigenden Betätigungsdruckes weitet sich die Röhrenfeder 36 auf und der Zeiger 45 zeigt den gegenwärtigen Druck an.

Im Rahmen der Aufweitungsbewegung nähert sich die zunächst mit größerem Abstand zu dem Einstellanschlag 67 angeordnete Betätigungspartie 62 an den Einstellanschlag 67 an. Die bis zum Erreichen des Einstellanschlages 67 zurückzulegende Wegstrecke hängt von der eingestellten Vorgabeposition ab. Erreicht die Betätigungspartie 62 den Einstellanschlag 67, so wird in der Folge das federbelastete Verschlußglied 54 von der Entlüftungsöffnung 52 abgehoben, die beim Ausführungsbeispiel aus einer etwa 0,3 mm bis 0,5 mm Durchmesser aufweisenden Düsenöffnung besteht. Zweckmäßigerweise liegt der Querschnitt der Drosselstelle 63 ebenfalls in diesem maßlichen Bereich.

Zwischen dem über den gedrosselten Steuerkanal 35 zuströmenden Druckmediums und dem über die Entlüftungsöffnung 52 ausströmenden Druckmedium stellt sich nun ein Gleichgewicht ein, woraus ein der Vorgabeposition entsprechender Betätigungsdruck in der Röhrenfeder 36 resultiert. Dieser wirkt gleichzeitig als Steuerdruck für die Druckregeleinheit 3, so daß diese eine entsprechende Sekundärdruckeinstellung vornimmt.

Bewegt man den Einstellanschlag 67 entgegen dem Uhrzeigersinn in Richtung zum befestigten Ende 37 der Röhrenfeder 36, so schließt sich das Entlüftungsventil 53. Als Folge steigt der Betätigungsdruck an. Dadurch weitet sich die Röhrenfeder 36 weiter auf, bis erneut die Betätigungspartie 62 mit dem Einstellanschlag 67 zusammenwirkt und erneut durch eine identische Zuström- und Ausströmrate an Druckmedium ein bei höherem Betätigungsdruck liegendes Gleichgewicht erzielt wird.

Ein Verlagern des Einstellanschlages 67 im Uhrzeigersinn, also in Öffnungsrichtung 68 des Verschlußgliedes 54, führt zu einer Freigabe eines größeren Ausströmquerschnittes im Bereich der Entlüftungsöffnung 52, als er zur Beibehaltung des aktuellen Betätigungsdruckes notwendig wäre. Dies führt zu einem Druckabfall in der Röhrenfeder 36, so daß sich die Röhrenfeder unverzüglich verengt und quasi dem Einstellanschlag 67 folgt, bis erneut wieder ein Gleichgewicht vorliegt.

Über die Anzeigeeinrichtung 44 wird der jeweils herrschende Betätigungsdruck angezeigt, der zweckmäßigerweise dem resultierenden Sekundärdruck entspricht. Auf diese Weise kann über das Manometer 2 sowohl eine Druckeinstellung als auch gleichzeitig eine Druckablesung erfolgen.

Hat sich ein eingestellter Druck ausbalanciert, nimmt das Verschlußglied 54 eine Offenstellung ein, bei der die ausströmende Druckmittelmenge der über den Steuerkanal 25 in die Röhrenfeder 26 zuströmenden Druckmittelmenge pro Zeiteinheit entspricht. Aufgrund der sehr geringen Strömungsquerschnitte im Steuerkanal 25 und in der Entlüftungsöffnung 52 sind die Luftverluste vernachlässigbar gering.

Aus Figur 7 geht hervor, daß zwischen die Druckregeleinheit 3 und das Manometer 2 bei Bedarf mindestens eine Funktionseinheit 77 zwischengeschaltet werden kann, mit der sich der Betrieb der Manometereinrichtung 1 beeinflussen läßt und/oder die in Abhängigkeit vom Betriebszustand der Manometereinrichtung 1 gewisse Funktionen ausführt. Es wäre denkbar, eine Funktionseinheit 77 als Start/Stopp-Funktionseinheit auszubilden, durch deren Betätigung der Betriebszustand der Manometereinrichtung 1 vorgegewerden kann. Denkbar wäre auch eine Funktionseinheit mit integriertem Sicherheitsventil, das über Druckschalter verfügt. Ferner wäre denkbar eine Wandlereinheit, die Drucksignale in Stromsignale umwandelt, ferner eine Diagnoseeinheit oder eine Steuereinheit.

## Patentansprüche

1. Manometereinrichtung, mit einem Manometer (2) in Röhrenfederbauart, das ein Gehäuse (4) aufweist und das über eine mit ihrem einen Ende (37) gehäusefest festgelegte gebogene Röhrenfeder (36) verfügt, deren Innenraum (48) über einen Manometer-einlaß (38) mit einem Druckmedium beaufschlagbar ist, wobei die Röhrenfeder (36) in Abhängigkeit von dem momentan in ihrem Innenraum (48) herrschenden Betätigungsdruck eine unterschiedlich starke Krümmung aufweist und bei einer Änderung des Betätigungsdruckes eine Verformung im Sinne einer Aufweitung oder Verengung erfährt, und wobei eine mit der Röhrenfeder (36) gekoppelte Anzeigeeinrichtung (44) vorhanden ist, deren angezeigter Wert vom momentanen Verformungsgrad der Röhrenfeder (36) abhängt, dadurch gekennzeichnet, daß der Röhrenfeder (36) ein Entlüftungsventil (53) zugeordnet ist, das eine mit dem Innenraum (48) der Röhrenfeder (36) kommunizierende Entlüftungsöffnung (52) beherrscht, und daß eine Einstelleinrichtung (66) zur variablen Vorgabe des Schaltzustandes des Entlüftungsventils (53) in Abhängigkeit vom Verformungsgrad der Röhrenfeder (36) vorhanden ist.

2. Manometereinrichtung nach Anspruch 1, dadurch gekennzeichnet, daß das Entlüftungsventil (53) ein der Entlüftungsöffnung (52) zugeordnetes bewegliches Verschlußglied (54) aufweist, das durch Federkraft in eine die Entlüftungsöffnung (52) verschließende Schließstellung vorgespannt ist, daß das Verschlußglied (54) mit einer sich bei der Verformung der Röhrenfeder (36) auf einem Verlagerungsweg (65) bewegenden Betätigungspartie (62) verbunden ist, bei deren in einer Öffnungsrichtung (68) erfolgenden Beaufschlagung das Verschlußglied (54) relativ zur Röhrenfeder (36) in eine das Ausströmen von Druckmedium aus dem Innenraum (48) der Röhrenfeder (36) ermöglichende Offenstellung bewegbar ist, und daß die Einstelleinrichtung (66) einen sich gehäuseseitig abstützenden Einstellanschlag (67) aufweist, der derart im Verlagerungsweg (65) der Betätigungspartie (62) angeordnet ist, daß diese bei im Sinne einer Aufweitung erfolgender Verformung der Röhrenfeder (36) an dem Einstellanschlag (67) zur Anlage kommen und von diesem in der Öffnungsrichtung (68) beaufschlagt werden kann, wobei der Einstellanschlag (67) in unterschiedlichen Vorgabepositionen entlang dem Verlagerungsweg (65) der Betätigungspartie (62) positionierbar ist.

3. Manometereinrichtung nach Anspruch 2, dadurch gekennzeichnet, daß die Einstelleinrichtung (66) über ein verstellbar am Manometergehäuse (4) angeordnetes, von außen her bedienbares Stellglied (69) verfügt, das zur Positionierung des Einstellanschlages (67) dient.

4. Manometereinrichtung nach Anspruch 3, dadurch gekennzeichnet, daß das Stellglied (69) einen am Manometergehäuse (4) drehbar gelagerten Stellring (73) aufweist.

5. Manometereinrichtung nach Anspruch 4, dadurch gekennzeichnet, daß der Stellring (73) von der Seitenwand einer die Anzeigeeinrichtung (44) abdeckenden zumindest teilweise durchsichtigen und bezüglich dem Manometergehäuse (4) drehbaren Abdeckkappe (75) gebildet ist.

6. Manometereinrichtung nach einem der Ansprüche 3 bis 5, dadurch gekennzeichnet, daß der Einstellanschlag (67) fest an dem Stellglied (73) angeordnet ist.

7. Manometereinrichtung nach einem der Ansprüche 3 bis 5, dadurch gekennzeichnet, daß der Einstellanschlag (67) zur Positionierung in den Vorgabepositionen relativ zum Manometergehäuse (4) in einer mit der Verstellrichtung (70') des Stellgliedes (69) zusammenfallenden Positionierrichtung (70) beweglich ist, und daß eine mit dem Manometergehäuse (4) verbundene erste Führung (86) und eine mit dem Einstellanschlag (67) verbundene zweite Führung (87) sowie ein gleichzeitig an beiden Führungen beweglich geführtes und durch das Stellglied (69) beaufschlagtes Übertragungsglied (79) vorhanden sind, wobei das Übertragungsglied (79) beim Verstellen des Stellgliedes (69) infolge des Zusammenwirkens mit der ersten Führung (86) quer zur Verstellrichtung (70') des Stellgliedes (69) verlagert wird und dabei durch das Zusammenwirken mit der zweiten Führung (87) eine Verlagerung des Einstellanschlages (67) in Positionierrichtung (70) hervorruft.

8. Manometereinrichtung nach Anspruch 7, dadurch gekennzeichnet, daß die beiden Führungen (86, 87) mit unterschiedlicher Ausrichtung quer zur Verstellrichtung (70') des Stellglieds (69) verlaufen.

9. Manometereinrichtung nach Anspruch 7 oder 8, dadurch gekennzeichnet, daß das Übertragungsglied (79) und das Stellglied (69) miteinander in Gewindeeingriff stehen.

10. Manometereinrichtung nach einem der Ansprüche 1 bis 9, dadurch gekennzeichnet, daß dem Manometer (2) eine Druckregeleinheit (3) zugeordnet ist, bei der der Betätigungsdruck als Steuerdruck wirkt.

11. Manometereinrichtung nach Anspruch 10, gekennzeichnet durch eine Druckregeleinheit (3) mit einem Reglergehäuse (5), das einen Primärdruck-Einlaß (6), einen Sekundärdruck-Auslaß (7) und ein in die Verbindung zwischen dem Primärdruck-Einlaß (6) und dem Sekundärdruck-Auslaß (7) zwischengeschaltetes Steuerventil (12) aufweist, wobei das Ventilglied (13) des Steuerventils (12) mit einem vorzugsweise als Membrane ausgebildeten Betätigungsorgan (18) in Wirkverbindung steht, das auf seiner dem Ventilglied (13) zugewandten Seite vom Sekundärdruck beaufschlagt ist und mit seiner entgegengesetzten anderen Seite eine Steuerkammer (24) begrenzt, die zum einen mit dem Manometereinlaß (38) und zum anderen über einen eine Drosselstelle (63) aufweisenden Steuerkanal (25) mit dem Primärdruck-Einlaß kommuniziert.

12. Manometereinrichtung nach Anspruch 11, dadurch gekennzeichnet, daß das Ventilglied (13) des Steuerventils (12) einen mit dem Betätigungsorgan (18) zusammenwirkenden Betätigungsstößel (15) aufweist, der Bestandteil eines zum Abbau des Sekundärdruckes dienenden Ablaßventils ist.

13. Manometereinrichtung nach Anspruch 11 oder 12, dadurch gekennzeichnet, daß das Manometergehäuse (4) im Bereich des Manometereinlasses (38) einen Anschlußstutzen (42) aufweist, mit dem es in eine mit der Steuerkammer (24) kommunizierende Anschlußöffnung (43) des Reglergehäuses (5) eingeschraubt ist.

14. Manometereinrichtung nach einem der Ansprüche 1 bis 13, dadurch gekennzeichnet, daß die Entlüftungsöffnung (52) in dem dem freien Ende (47) der Röhrenfeder (36) zugeordneten Bereich angeordnet ist und sich dabei vorzugsweise an der Stirnseite des freien Endes (47) der Röhrenfeder (36) befindet.

## Claims

1. Manometer device, with a manometer (2) of Boudon tube design, having a housing (4) and a curved Boudon tube (36) fixed to the housing by one end (37) which has an interior space (48) capable of being supplied with a pressure medium via a manometer inlet (38), wherein the Boudon tube (36) has a curvature which varies according to the operating pressure currently prevailing in the interior space (48) and, with a variation in the operating pressure, undergoes a deformation in the form of expansion or contraction, and wherein there is a display unit (44) coupled to the Boudon tube (36), with a displayed value which depends on the current amount of deformation of the Boudon tube (36), characterized in that the Boudon tube (36) is assigned a venting valve (53) which controls a vent port (52) communicating with the interior space (48) of the Boudon tube (36), and that there is a setting device (66) for variable presetting of the venting valve (53) depending on the amount of deformation of the Boudon tube (36).

2. Manometer device according to claim 1, characterized in that the venting valve (53) has a movable seal element (54) assigned to the vent port (52), which is prestressed by spring force in a closing position closing the vent port (52), that the seal element (54) is connected to an actuating section (62) moving on a displacement path (65) when the Boudon tube (36) is deformed, so that when the actuating section is pressure-loaded in an opening direction (68) the seal element (54) is movable relative to the Boudon tube (36) into an open position allowing the escape of pressure medium from the interior space (48) of the Boudon tube (36), and that the setting device (66) has a setting stop (67) supported on the housing side and located in the displacement path (65) of the actuating section (62) in such a way that the latter, when the Boudon tube (36) is deformed by expansion, makes contact with the setting stop (67) and can be pressure-loaded by the latter in the opening direction (68), while the setting stop (67) can be positioned in various specified positions along the displacement path (65) of the actuating section (62).

3. Manometer device according to claim 2, characterized in that the setting device (66) has a control element (69), mounted adjustably on the manometer housing (4) and operable from the outside, which is used for positioning the setting stop (67).

4. Manometer device according to claim 3, characterized in that the control element (69) has a set collar (73), rotatably mounted on the manometer housing (4).

5. Manometer device according to claim 4, characterized in that the set collar (73) is formed by the side wall of a cover cap (75) covering the display unit (44), which is at least partially transparent and is rotatable relative to the manometer housing (4).

6. Manometer device according to any of claims 3 to 5, characterized in that the setting stop (67) is immovably mounted on the set collar (73).

7. Manometer device according to any of claims 3 to 5, characterized in that, for positioning in the preset positions, the setting stop (67) is movable relative to the manometer housing (4) in a positioning direction (70) coinciding with the direction of adjustment (70') of the control element (69), and that there is a first guide (86) connected to the manometer housing (4) and a second guide (87) connected to the setting stop (67), together with a transmission element (79) which is movably guided simultaneously on both guides and pressure-loaded by the control element (69), wherein on adjustment of the control element (69) the transmission element (79), as a result of interaction with the first guide (86), is displaced at right-angles to the direction of adjustment (70') of the control element (69), thereby generating a displacement of the setting stop (67) in the positioning direction (70) due to the interaction with the second guide (87).

8. Manometer device according to claim 7, characterized in that the two guides (86, 87) run with varying alignment at right-angles to the direction of adjustment (70') of the control element (69).

9. Manometer device according to claim 7 or 8, characterized in that the transmission element (79) and the control element (69) are in threaded engagement with one another.

10. Manometer device according to any of claims 1 to 9, characterized in that the manometer (2) is assigned a pressure regulator (3), with the operating pressure acting as control pressure.

11. Manometer device according to claim 10, characterized by a pressure regulator (3) with a regulator casing (5), having a primary pressure inlet (6), a secondary pressure outlet (7) and a control valve (12) interposed in the connection between the primary pressure inlet (6) and the secondary pressure outlet (7), wherein the valve member (13) of the control valve (12) is in active connection with an actuating element (18) preferably in the form of a membrane, which is subjected to secondary pressure on its side facing towards the valve member (13) and with its opposite other side bounds a control chamber (24) communicating on the one hand with the manometer inlet (38) and on the other hand with the primary pressure inlet via a control passage (25) with a restrictor (63).

12. Manometer device according to claim 11, characterized in that the valve member (13) of the control valve (12) has an operating plunger (15) working in conjunction with the actuating element (18), and which is part of a drain valve used to reduce the secondary pressure.

13. Manometer device according to claim 11 or 12, characterized in that the manometer housing (4) has a connection fitting (42) in the area of the manometer inlet (38), by means of which it is screwed into a connection port (43) of the regulator casing (5) communicating with the control chamber (24).

14. Manometer device according to any of claims 1 to 13, characterized in that the vent port (52) is located in the area assigned to the free end (47) of the Boudon tube (36), being preferably located on the end face of the free end (47) of the Boudon tube (36).

## Revendications

1. Dispositif à manomètre comportant un manomètre (2) du type de construction à tube élastique, qui comporte un boîtier (4) et qui dispose d'un tube élastique (36) courbé, fixé solidairement avec le boîtier par l'une (37) de ses extrémités, dont la chambre intérieure (48) peut être alimentée avec un fluide sous pression, par une entrée de manomètre (38), le tube élastique (36) présentant une courbure différemment marquée en fonction de la pression d'actionnement régnant momentanément dans sa chambre intérieure (48) et subissant une déformation, au sens d'un élargissement ou d'un rétrécissement, en cas de variation de la pression d'actionnement, et un dispositif d'affichage (44), accouplé au tube élastique (36), étant prévu, dont la valeur affichée dépend du degré de déformation momentané du tube élastique (36), caractérisé en ce qu'au tube élastique (36) est associée une soupape de purge d'air (53), qui maîtrise un orifice de purge d'air (52), communiquant avec la chambre intérieure (48) du tube élastique (36), et en ce qu'un dispositif de réglage (66) est prévu pour imposer, de manière variable, l'état de commutation de la soupape de purge d'air (53), en fonction du degré de déformation du tube élastique (36).

2. Dispositif à manomètre selon la revendication 1, caractérisé en ce que la soupape de purge d'air (53) présente un organe de fermeture (54) mobile, associé à l'orifice de purge d'air (52), qui est précontraint, par la force d'un ressort, dans une position de fermeture fermant l'orifice de purge d'air (52), en ce que l'organe de fermeture (54) est relié à une partie d'actionnement (62), se déplaçant sur un parcours de déplacement (65), lors de la déformation du tube élastique (36), l'organe de fermeture (54) étant déplaçable par rapport au tube élastique (36), dans une position d'ouverture permettant l'écoulement du fluide sous pression hors de la chambre intérieure (48) du tube élastique (36), lors de la sollicitation de ladite partie d'actionnement, se produisant dans un sens d'ouverture (68), et en ce que le dispositif de réglage (66) présente une butée de réglage (67), prenant appui côté boîtier, qui est disposée dans le parcours de déplacement (65) de la partie d'actionnement (62), de manière que celle-ci vienne s'appliquer contre la butée de réglage (67), en cas de déformation du tube élastique (36), se produisant dans le sens d'un élargissement, et en ce qu'elle peut être sollicitée par ladite butée de réglage dans le sens d'ouverture (68), la butée de réglage (67) étant positionnable dans différentes positions de consigne le long du parcours du déplacement (65) de la partie d'actionnement (62).

3. Dispositif à manomètre selon la revendication 2, caractérisé en ce que le dispositif de réglage (66) dispose d'un organe de positionnement (69), monté déplaçable sur le boîtier de manomètre (4), commandable à partir de l'extérieur, qui sert au positionnement de la butée de réglage (67).

4. Dispositif à manomètre selon la revendication 3, caractérisé en ce que l'organe de positionnement (69) comporte un anneau de positionnement (73), monté tournant sur le boîtier de manomètre (4).

5. Dispositif à manomètre selon la revendication 4, caractérisé en ce que l'anneau de positionnement (73) est formé par la paroi latérale d'un capuchon de couverture (75), au moins partiellement transparent, recouvrant le dispositif d'affichage (44) et pouvant tourner par rapport au boîtier de manomètre (4).

6. Dispositif à manomètre selon l'une des revendications 3 à 5, caractérisé en ce que la butée de réglage (67) est montée fixement sur l'organe de positionnement (73).

7. Dispositif à manomètre selon l'une des revendications 3 à 5, caractérisé en ce que pour le positionnement dans les positions de consigne par rapport au boîtier de manomètre (4), la butée de réglage (67) est mobile dans une direction de positionnement (70), coïncidant avec la direction de déplacement (70') de l'organe de positionnement (69), et en ce que sont prévus un premier guidage (86), relié au boîtier de manomètre (4) et un deuxième guidage (87), relié à la butée de réglage (67) ainsi qu'un organe de transmission (79), guidé mobile simultanément sur les deux guidages et sollicité par l'organe de positionnement (69), l'organe de transmission (79) étant déplacé transversalement à la direction de déplacement (70') de l'organe de positionnement (69), lors du déplacement de l'organe de positionnement (69) par suite de la coopération avec le premier guidage (86), et provoque ainsi, du fait de la coopération avec le deuxième guidage (87), un déplacement de la butée de réglage (67) dans la direction de positionnement (70).

8. Dispositif à manomètre selon la revendication 7, caractérisé en ce que les deux guidages (86, 87) s'étendent avec une orientation différente, transversalement à la direction de déplacement (70') de l'organe de positionnement (69).

9. Dispositif à manomètre selon la revendication 7 ou 8, caractérisé en ce que l'organe de transmission (79) et l'organe de positionnement (69) sont assemblés par filetage.

10. Dispositif à manomètre selon l'une des revendications 1 à 9, caractérisé en ce qu'au manomètre (2) est associée une unité de régulation de pression (3), dans laquelle la pression d'actionnement sert de pression de commande.

11. Dispositif à manomètre selon la revendication 10, caractérisé par une unité de régulation de pression (3) avec un boîtier de régulation (5), qui présente une entrée de pression primaire (6), une sortie de pression secondaire (7) et une soupape de commande (12), montée dans la liaison entre l'entrée de pression primaire (6) et la sortie de pression secondaire (7), l'organe de soupape (13) de la soupape de commande (12) étant en liaison active avec un organe d'actionnement (18), conformé de préférence en tant que membrane, qui, sur son côté tourné vers l'organe de soupape (13), est sollicité par la pression secondaire et qui délimite, avec son autre côté opposé, une chambre de commande (24), qui communique d'une part avec l'entrée de manomètre (38) et d'autre part avec l'entrée de pression primaire, par un canal de commande (25) présentant un point d'étranglement (63).

12. Dispositif à manomètre selon la revendication 1, caractérisé en ce que l'organe de soupape (13) de la soupape de commande (12) présente un poussoir d'actionnement (15), coopérant avec l'organe d'actionnement (18), qui fait partie intégrante d'une soupape de décharge servant à la réduction de la pression secondaire.

13. Dispositif à manomètre selon la revendication 11 ou 12, caractérisé en ce que le boîtier de manomètre (4) présente, dans la région de l'entrée de manomètre (38), une tubulure de raccordement (42), avec laquelle il est vissé dans une ouverture de raccordement (43), communiquant avec la chambre de commande (24) du boîtier de régulateur (5).

14. Dispositif à manomètre selon l'une des revendications 1 à 13, caractérisé en ce que l'orifice de purge d'air (52) est situé dans la zone associée à l'extrémité libre (47) du tube élastique (36), et se trouve de préférence sur le côté frontal de l'extrémité libre (47) du tube élastique (36).
